# EUROPÄISCHE PATENTSCHRIFT

(11) **EP 3 150 060 B1**
(45) Veröffentlichungstag und Bekanntmachung des Hinweises auf die Patenterteilung: **04.07.2018**
(21) Anmeldenummer: 16184265.3
(22) Anmeldetag: 16.08.2016
(51) Int. Cl.: A01F 12/40

(54) **STROHHÄCKSLER FÜR EINEN MÄHDRESCHER MIT GEGENMESSERN UND REIBLEISTE**
CHAFF CHOPPER FOR A COMBINE HARVESTER WITH COUNTER-BLADES AND RUB BAR
BROYEUR DE PAILLE DE MOISSONNEUSE-BATTEUSE COMPRENANT DES COUTEAUX FIXES ET BARRE DE FRICTION

(30) Priorität: 29.09.2015 DE 102015218726
(43) Veröffentlichungstag der Anmeldung: 05.04.2017
(73) Patentinhaber: Deere & Company, Moline, IL 61265 (US)
(72) Erfinder: Weichholdt, Dirk, 57200 Woelfling les Sarreguemines (FR)
(74) Vertreter: Holst, Sönke

(56) Entgegenhaltungen:
- EP-A2- 0 415 419
- US-A- 4 612 941
- US-A1- 2010 291 982

## Beschreibung

Die Erfindung betrifft einen Strohhäcksler für einen Mähdrescher, mit einem Gehäuse, das einen Einlass und einen Auslass aufweist, einem im Gehäuse angeordneten Rotor mit pendelnd aufgehängten Häckselmessern, verstellbar angeordneten Gegenmessern, die in den Hüllkreis der Häckselmesser hineinfahrbar sind, und mit einer verstellbar angeordneten Reibleiste, die zwischen einer aktiven Betriebsposition, in der sie stromab der Gegenmesser mit den Häckselmessern zur Zerkleinerung des Strohs zusammenwirkt, und einer inaktiven Außerbetriebsposition bewegbar ist, sowie einen damit ausgerüsteten Mähdrescher.

### Technologischer Hintergrund

Strohhäcksler werden in der Landwirtschaft verwendet, um die von einer Trenneinrichtung eines Mähdreschers ausgeworfenen Erntegutreste, bei denen es sich insbesondere um Stroh handelt, zu zerkleinern. Das zerkleinerte Stroh wird anschließend durch Strohleitbleche und/oder angetriebene Fördereinrichtungen über die Arbeitsbreite des Erntevorsatzes auf dem Feld verteilt und soll dort biologisch abgebaut werden, um als Dünger für nachfolgende Früchte zu dienen.

Gebräuchliche Strohhäcksler umfassen einen Rotor, an dem pendelnd aufgehängte Häckselmesser befestigt sind. Die Häckselmesser zerkleinern das Stroh im Zusammenwirken mit ortsfesten Gegenmessern, welche üblicherweise positionsverstellbar angeordnet sind, um den Zerkleinerungsgrad des Strohs an die jeweiligen Anforderungen und Bedingungen anpassen zu können (vgl. US 4 612 941A). Ein Strohhäcksler gemäss dem Oberbegriff des Anspruchs 1 ist aus der Druckschrift US-A1-2010/291982 bekannt. Soll das Stroh noch feiner zerkleinert werden, um schneller und gründlicher biologisch abgebaut zu werden, kann eine so genannte Reibleiste stromab der Gegenmesser in eine Betriebsposition verbracht werden, in der sie mit den Häckselmessern zusammenwirkt. Diese Reibleiste erstreckt sich vom Gehäuse des Strohhäckslers zumindest näherungsweise radial nach innen und bewirkt, dass sich Stroh an ihrer stromauf liegenden Seite ansammelt und durch die Häckselmesser noch einmal zerkleinert wird, wenn es durch die Häckselmesser über die Reibleiste hinüber gefördert wird. Die Reibleiste befindet sich in ihrer Betriebsposition knapp außerhalb des Hüllkreises der Häckselmesser, insbesondere wenn sie eine glatte radiale Innenkante aufweist, oder kann sogar in den Hüllkreis der Häckselmesser eindringen, wenn sie mit Einkerbungen versehen ist, durch welche die Häckselmesser hindurch passieren. Die Reibleiste kann in eine inaktive Außerbetriebsposition verbracht werden, indem sie radial nach außen aus dem Gehäuse des Strohhäckslers hinaus gezogen oder um ihre Längsachse verschwenkt und flach auf den benachbarten Bereich des Gehäuses des Strohhäckslers gelegt wird.

### Aufgabe

Im Stand der Technik erfolgt die Verstellung der Gegenmesser und der Reibleiste unabhängig voneinander. Es sind daher durch den Bediener bei manueller Verstellung zwei Hebel o.ä. und bei Fernbetätigung aus der Kabine zwei Schalter oder Knöpfe zu betätigen, um einerseits die Gegenmesser und anderseits die Reibleiste zu verstellen. Es ist demnach ein doppelter mechanischer Aufwand für die Verstellung erforderlich und die Möglichkeit für Fehlbedienungen eröffnet, denn die Verwendung der Reibleiste ohne Gegenmesser führt kaum zur gewünschten Wirkung, sondern allenfalls zum Verschleiß der Reibleiste und zu Verstopfungen.

Die der Erfindung zu Grunde liegende Aufgabe wird darin gesehen, einen Strohhäcksler bereitzustellen, bei dem die genannten Nachteile nicht oder in verminderter Form vorliegen.

### Erfindung

Die vorliegende Erfindung wird durch die Patentansprüche definiert.

Ein Strohhäcksler für einen Mähdrescher ist mit einem Gehäuse, das einen Einlass und einen Auslass aufweist, einem im Gehäuse angeordneten Rotor mit pendelnd aufgehängten Häckselmessern, im Gehäuse mittels einer Mechanik verstellbar angeordneten Gegenmessern, die in den Hüllkreis der Häckselmesser hineinfahrbar sind, und mit einer verstellbar angeordneten Reibleiste ausgestattet, die zwischen einer aktiven Betriebsposition, in der sie stromab der Gegenmesser mit den Häckselmessern zur Zerkleinerung des Strohs zusammenwirkt, und einer inaktiven Außerbetriebsposition bewegbar ist. Die Mechanik zur Verstellung der Reibleiste ist mit der Mechanik zur Verstellung der Gegenmesser gekoppelt.

Auf diese Weise erreicht man, dass die Reibleiste stets in einem bestimmten Verhältnis zur Position der Gegenmesser steht, sodass Fehlbedienungen ausgeschlossen sind und die Verstellmechanik vereinfacht werden kann.

Die Mechaniken zur Verstellung der Gegenmesser und der Reibleiste können derart ausgelegt sein, dass zuerst die Gegenmesser in den Hüllkreis der Häckselmesser gelangen und die Reibleiste erst dann in ihre Betriebsposition gelangt, wenn die Häckselmesser bis zu einem festgelegten Teil ihres Weges zu einer Endstellung oder bis zu der Endstellung in den Hüllkreis der Häckselmesser gelangt sind.

Die Mechaniken zur Verstellung der Gegenmesser und der Reibleiste können von Hand durch den Bediener vor Ort oder durch einen fremdkraftbetätigten Aktor betätigbar sein, damit ein Bediener sie mittels einer Bedienerschnittstelle aus der Kabine verstellen kann.

Die Mechanik zur Verstellung der Reibleiste kann eine Halterung umfassen, die über eine Langlochverbindung mit der Mechanik zur Verstellung der Gegenmesser gekoppelt ist, um zu erreichen, dass zuerst die Gegenmesser in den Hüllkreis gelangen und erst anschließend die Reibleiste in ihre Betriebsposition gelangt. Eine zweite Langlochverbindung kann dafür sorgen, dass die Gegenmesser in ihrer Endstellung verbleiben, während die Reibleiste erst dann in ihre Betriebsstellung gelangt, nachdem die Gegenmesser schon ihre Endstellung erreicht haben.

### Ausführungsbeispiel

Anhand der Abbildungen werden zwei Ausführungsbeispiele der Erfindung erläutert, wobei die Bezugszeichen nicht zur einschränkenden Auslegung der Ansprüche herangezogen werden dürfen. Es zeigen:
- Fig. 1: eine schematische Seitenansicht eines Mähdreschers mit einem Strohhäcksler,
- Fig. 2: eine Seitenansicht einer ersten Ausführungsform des Strohhäckslers,
- Fig. 3: eine Seitenansicht einer zweiten Ausführungsform des Strohhäckslers, und
- Fig. 4: ein Diagramm zur Darstellung der Arbeitsweise der Mechaniken zur Verstellung der Gegenmesser und der Reibleiste.

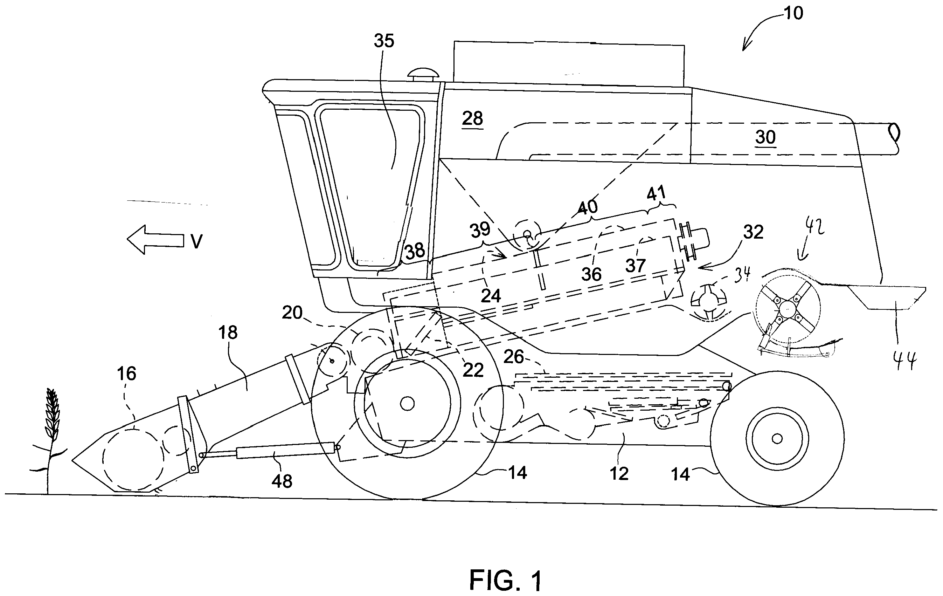

Die Figur 1 zeigt einen selbstfahrenden Mähdrescher 10 mit einer tragenden Struktur 12, die mit im Eingriff mit dem Erdboden stehenden Rädern 14 versehen ist. Obwohl die Arbeitsmaschine 10 mit Rädern dargestellt ist, könnte sie auch mit zwei oder vier Gleisketten versehen sein. Ein mittels eines Hydraulikzylinders 48 höhenverstellbarer Erntevorsatz 16 in Form eines Schneidwerks wird zum Ernten von Erntegut verwendet und führt es einem Schrägförderer 18 zu. Der Schrägförderer 18 enthält eine Fördereinrichtung, um das geerntete Gut einer Leittrommel 20 zuzuführen. Die Leittrommel 20 führt das Gut nach oben durch einen Einlassübergangsabschnitt 22 hindurch und einer drehbaren, zum Dreschen und Trennen eingerichteten Gutbearbeitungseinrichtung 24 zu. Die dargestellte Gutbearbeitungseinrichtung 24 ist im Mähdrescher axial angeordnet, sie könnte aber auch in anderen Orientierungen relativ zur Längsachse der Arbeitsmaschine 10 angeordnet und beispielsweise als Tangentialdreschwerk mit einer oder mehreren Dresch- und ggf. Trenntrommeln mit nachfolgendem Strohschüttler oder Trennrotor(en) ausgeführt sein.

Im Betrieb drischt und trennt die Gutbearbeitungseinrichtung 24 das geerntete Gut. Das Korn und die Spreu fallen durch Roste am Boden der Gutbearbeitungseinrichtung 24 in ein Reinigungssystem 26. Das Reinigungssystem 26 entfernt die Spreu und führt das saubere Korn einem (nicht gezeigten) Elevator für sauberes Korn zu. Der Elevator für sauberes Korn legt das Korn in einem Korntank 28 ab. Das saubere Korn im Korntank 28 kann durch einen Entladeschneckenförderer 30 einem Lastwagen oder Anhänger zugeführt werden.

Ausgedroschenes, vom Korn befreites Stroh wird von der Gutbearbeitungseinrichtung 24 durch einen Auslass 32 einer Auswurftrommel 34 zugeführt. Die Auswurftrommel 34 führt das Stroh einem Strohhäcksler 42 zu, der es häckselt und nach hinten auswirft, wo es durch Strohleitbleche 44 seitlich abgelenkt und über die Arbeitsbreite des Erntevorsatzes 16 über das Feld verteilt wird. Anstelle der Strohleitbleche 44 könnten auch angetriebene Streugebläse treten. Der Betrieb der Arbeitsmaschine 10 wird von einer Bedienerkabine 35 aus gesteuert.

Die Gutbearbeitungseinrichtung 24 umfasst ein zylindrisches Rotorgehäuse 36 und einen im Rotorgehäuse 36 angeordneten, drehbaren Rotor 37. Der vordere Teil des Rotors 37 und das Rotorgehäuse 36 definieren einen Beschickungsabschnitt 38. Stromab des Beschickungsabschnitts 38 sind ein Dreschabschnitt 39, ein Trennabschnitt 40 und ein Auslassabschnitt 41. Der Rotor 37 ist im Beschickungsabschnitt 38 mit einer konischen Rotortrommel versehen, die wendelförmige Beschickungselemente zum Eingreifen in Gut aufweist, das sie von der Leittrommel 20 und vom Einlassübergangsbereich 22 erhält. Unmittelbar stromab des Beschickungsabschnitts 38 befindet sich der Dreschabschnitt 39. Im Dreschabschnitt 39 weist der Rotor 37 eine zylindrische Rotortrommel auf, die mit einer Anzahl von Dreschelementen versehen ist, um das vom Beschickungsabschnitt 38 erhaltene Gut zu dreschen. Stromab des Dreschabschnitts 39 befindet sich der Trennabschnitt 40, in dem das im gedroschenen Gut noch enthaltene Korn freigesetzt wird und durch ein bodenseitiges Rost im Rotorgehäuse 36 hindurch in das Reinigungssystem 28 fällt. Der Trennabschnitt 40 geht in den Auslassabschnitt 41 über, in dem das vom Korn befreite Gut (Stroh) aus der Gutbearbeitungseinrichtung 24 ausgestoßen wird.

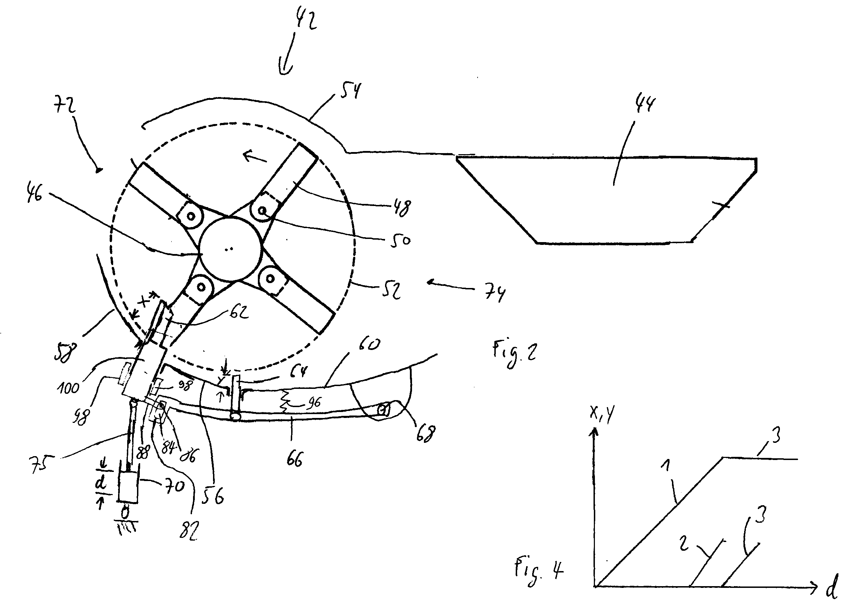

Die Figur 2 zeigt den Strohhäcksler 42 in einer gegenüber der Figur 1 vergrößerten Darstellung. Der Strohhäcksler 42 umfasst einen quer zur Vorwärtsrichtung V des Mähdreschers 10 (vgl. Figur 1) und horizontal angeordneten Rotor 46, der durch geeignete Antriebe um seine Achse in Drehung versetzbar ist. Um den Umfang des Rotors 46 und seine Länge sind Konsolen verteilt, an denen Häckselmesser 48 um Pendelachsen 50 frei schwenkbar gelagert sind. Ein den Rotor 46 einschließendes Gehäuse 54 - 60 umfasst eine obere Abdeckung 54 und untere Abdeckungen 58, 56 und 60, die einen vorderen Einlass 72 zur Aufnahme des Strohs von der Gutbearbeitungseinrichtung 24 (und ggf. von Kaff aus dem Reinigungssystem 26) sowie einen rückwärtigen Auslass 74 definieren, aus dem das Häckselgut schließlich nach hinten gegen die Strohleitbleche 44 ausgeworfen wird.

Die Häckselmesser 48 wirken mit Gegenmessern 62 zusammen, die sich durch einen Spalt zwischen einer vorderen, unteren Abdeckung 58 und einer mittleren, unteren Abdeckung 56 hindurch erstrecken und mittels eines Aktors 70 mehr oder weniger weit in den von den Häckselmessern 48 beschriebenen Hüllkreis 52 hineingefahren werden können. Die Häckselmesser 48 oder ein sie tragender Halter 100 sind oder ist zwischen Führungen 98 in etwa radialer Richtung zum Rotor 46 verschiebbar gelagert und um eine parallel zur Drehachse des Rotors 46 verlaufende Achse schwenkbar an der Kolbenstange 75 des seinerseits um eine parallel zur Drehachse des Rotors 46 verlaufende Achse schwenkbar an der tragenden Struktur 12 angelenkten Aktors 70 angelenkt, der hier als Hydraulikzylinder dargestellt ist, welcher durch einen linearen oder rotativen elektrischen Verstelltrieb ersetzt werden könnte. Die Verstellung des Aktors 70 erfolgt mittels einer Bedienerschnittstelle von der Kabine 35 aus. Wenn die Verstellrichtung des Aktors 70 und die Verschieberichtung des Halters 100 zusammen fallen, können die Schwenkachsen zwischen dem Halter 100 und der Kolbenstange 75 und zwischen dem Aktor und der tragenden Struktur 12 auch durch starre Verbindungen ersetzt werden.

Weiterhin ist eine schwenkbare Halterung 66 vorgesehen, die an einer mit der rückwärtigen Abdeckung 60 (oder der tragenden Struktur 12) verbundenen Konsole schwenkbar angelenkt ist, um eine sich parallel zur Drehachse des Rotors 46 erstreckende Schwenkachse 68. Eine Druckfeder 96 spannt die Halterung 66 nach unten vor. An der Halterung 66 ist eine Reibleiste 64 angebracht. Die Reibleiste 64 erstreckt sich durch einen Spalt zwischen der mittleren, unteren Abdeckung 56 und einer rückwärtigen, unteren Abdeckung 60 in den Innenraum des Gehäuses des Strohhäckslers 42. Die Reibleiste 64 ist starr an der Halterung 66 angebracht.

Die Reibleiste 64 erstreckt sich in der in Figur 2 gezeigten Betriebsstellung vom Gehäuse 54-60 des Strohhäckslers 42 zumindest näherungsweise radial nach innen und bewirkt, dass sich Stroh an ihrer stromauf liegenden Seite ansammelt und durch die Häckselmesser 48 noch einmal zerkleinert wird, wenn es durch die Häckselmesser 48 über die Reibleiste 64 hinüber gefördert nach hinten wird. Die Reibleiste 64 befindet sich in ihrer Betriebsposition knapp außerhalb des Hüllkreises 52 der Häckselmesser 48, wie in der Figur 2 gezeigt, insbesondere wenn sie eine glatte radiale Innenkante aufweist, oder kann sogar in den Hüllkreis 52 der Häckselmesser 48 eindringen, wenn sie mit Einkerbungen versehen ist, durch welche die Häckselmesser 48 hindurch passieren. Die Reibleiste 64 kann in eine inaktive Außerbetriebsposition verbracht werden, indem sie radial nach außen aus dem Gehäuse 54-60 des Strohhäckslers 42 hinaus gezogen oder zumindest soweit nach außen gezogen wird, dass die keine nennenswerte Wirkung mehr hat.

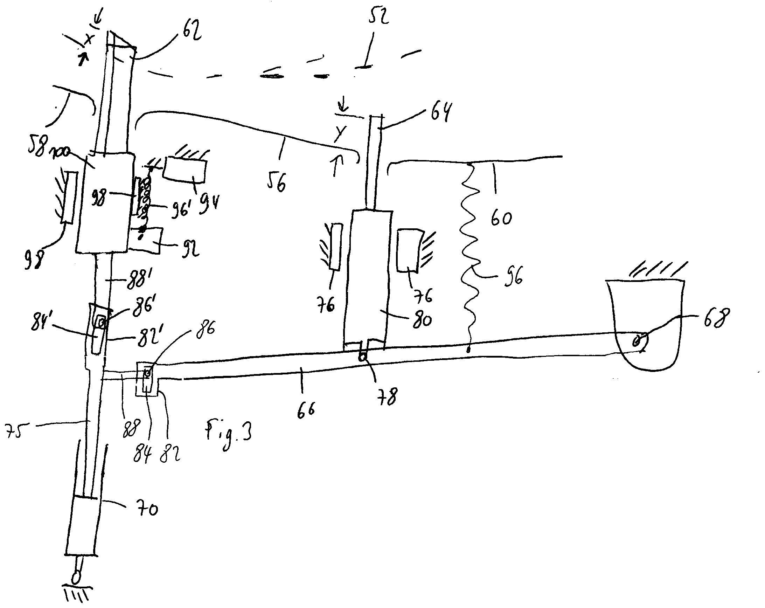

Dazu dient eine Langlochkupplung zwischen der Halterung 66 und den Gegenmessern 62. Die Gegenmesser 62 bzw. ihr Halter 100 oder der Aktor 70 ist mit einem Arm 88 verbunden, der einen Stift 86 trägt, der in ein Langloch 84 in einem Fortsatz 82 der Halterung 66 eingreift. Ausgehend von der einer Außerbetriebsstellung, in der sich die Gegenmesser 62 und die Reibleiste 64 außerhalb des Gehäuses 54-60 befinden, bewegt der Aktor 70 zunächst die Gegenmesser 62 in das Gehäuse 54-60 und in den Hüllkreis 52 der Häckselmesser 48 hinein. Die Druckfeder 96 zieht das Langloch 84 nach unten, sodass der Stift 86 an dessen unterem Ende anliegt und beim Ausfahren der Kolbenstange 75 nach und nach im Langloch 84 nach oben wandert, während die Reibleiste 64 sich außerhalb des Gehäuses 54-60 befindet. Erst wenn der Aktor 70 die Gegenmesser 62 einen bestimmten Weg x in den Hüllkreis 52 verbracht hat, kommt der Stift 86 am oberen Ende des Langlochs 84 in Anlage und bewegt die Halterung 66 mit der Reibleiste 64 in den Innenraum des Gehäuses 54-60 in ihre aktive Betriebsstellung, wie sie in der Figur 3 gezeigt ist. Der Rückweg erfolgt analog. Wenn der Aktor 70 somit die Gegenmesser 62 über einen bestimmten Weg x hinaus verstellt, bewegt sich die Reibleiste 64 mit.

Die Halterung 66, die Langlochkupplung, die Gegenmesser 62 und die Reibleiste 64 sind insbesondere derart dimensioniert und positioniert, dass bei einer eingefahrenen Stellung des Aktors 70 weder Gegenmesser 62 in den Hüllkreis 52 der Häckselmesser 48 noch die Reibleiste 64 in das Gehäuse 54-60 eindringen. Dann erfolgt eine relativ energiesparende Arbeitsweise des Strohhäckslers 42, die jedoch das Stroh auch nur in einem geringen Maße schneidet. Wird der Aktor 70 dann um einen Weg d (vgl. die Figuren 2 und 4) weiter ausgefahren, gelangen zunächst nur die Gegenmesser 62 um einen Weg x in den Hüllkreis 52, nicht aber die Reibleiste 64 in das Gehäuse 54-60. Das ist erst dann der Fall, wenn die Gegenmesser 62 einen bestimmten Weg x in den Hüllkreis 52 zurückgelegt haben, der beispielsweise bei 75 % ihres Hubs betragen kann, wie in der Figur 4 anhand der Kurven 1 für die Gegenmesser 62 und 2 für die Reibleiste 64 gezeigt. Bei ausgefahrenem Aktor 70 ergibt sich die in der Figur 2 gezeigte Situation, in der sowohl die Gegenmesser 62 als auch die Reibleiste 64 weitest möglich in den Hüllkreis 52 bzw. in das Gehäuse 54-60 eindringen. Dann wird das Stroh durch die Häckselmesser 48 im Zusammenwirken mit den Gegenmessern 62 intensiv geschnitten und mittels der Reibleiste 64 weiter zerkleinert bzw. aufgespleißt, damit es schnell biologisch abgebaut werden kann.

Die Figur 3 zeigt eine zweite Ausführungsform der Erfindung, bei der mit der ersten Ausführungsform übereinstimmende Elemente mit denselben Bezugszeichen gekennzeichnet sind. Bei der Ausführungsform nach Figur 3 ist ein Halter 80 der Reibleiste 64 verschiebbar zwischen Führungen 76 gelagert und durch eine Schwenklagerung 78 um eine zur Drehachse des Rotors 46 parallele Achse an der Halterung 66 angelenkt.

Die Halterung 66 ist, wie bei der ersten Ausführungsform, über die Langlochkupplung mit dem Langloch 84 und dem Stift 86 mit der Kolbenstange 75 des Aktors 70 gekoppelt. Eine weitere Langlochkupplung mit einem Langloch 84' in einem mit der Kolbenstange 75 gekoppelten Fortsatz 82' und einem Stift 86', der über einen starr am Halter 100 angebrachten Arm 88' mit einem Halter 100 der Gegenmesser 62 gekoppelt ist, dient zur Begrenzung des Verstellwegs der Gegenmesser 62 bei Erreichen von deren Endstellung, während eine weitere Verstellung der Reibleiste 64 noch erfolgt. Der Halter 100 ist zwischen Führungen 98 verschiebbar gelagert und mit einem Fortsatz 92 verbunden, der durch eine ziehende Feder 96' in Richtung auf die Drehachse des Rotors 48 vorgespannt ist und mit einem gehäusefesten Anschlag 94 zusammenwirkt.

Die Wirkungsweise der Ausführungsform nach Figur 3 ist derart, dass die Feder 96 die Halterung 100 nach oben zieht, bis der Stift 86' am oberen Ende des Langlochs 84' anliegt. Ist der Aktor 70 eingefahren, befinden sich sowohl die Gegenmesser 62 außerhalb des Hüllkreises 52 der Häckselmesser 48 und vorzugsweise auch innerhalb der Abdeckungen 56-60, als auch die Reibleiste 64 außerhalb der Abdeckungen 56-60. Beim Ausfahren des Aktors 70 bleibt der Stift 86' am oberen Ende des Langlochs 84' in Anlage und es gelangen zunächst nur die Gegenmesser 62 in den Hüllkreis 52, bis der Fortsatz 92 am Anschlag 94 zur Anlage kommt und die Gegenmesser 62 ihre weitest möglich ausgefahrene Stellung erreicht haben. Die Reibleiste 64 bewegt sich zunächst noch nicht, wie bei der ersten Ausführungsform nach Figur 2. Erst wenn dann der Aktor 70 noch weiter ausgefahren wird, kommt der Stift 86 am oberen Ende des Langlochs 84 in Anlage und es gelangt die Reibleiste 64 in den Innenraum der Abdeckungen 56-60. Dabei bewegt sich das Langloch 84' gegenüber dem Stift 86' nach oben. Dieser Vorgang entspricht den Kurven 3 der Figur 4, wobei d wieder der Weg des Aktors 70, x die Länge ist, über welche die Gegenmesser 62 in den Hüllkreis 52 eindringen und y die Länge ist, über welche die Reibleiste 64 in das Gehäuse 54-60 eindringt.

Die in den Figuren 2 und 3 gezeigten Mechaniken zur gemeinsamen Verstellung der Gegenmesser 62 und der Reibleiste 64 können an beiden seitlichen Enden des Strohhäckslers 42 oder an nur einem Ende vorgesehen sein. Der Aktor 70 kann auch entfallen und durch Mittel zur manuellen Verstellung ersetzt werden, beispielsweise durch einen manuell betätigbaren Hebel oder ein gestellfestes Langloch, durch das eine mit der Halterung 66 gekoppelte Arretierschraube hindurchgreift. Die Führungen 76 der Figur 3 können auch bei der ersten Ausführungsform verwendet werden, oder die starre Anbringung der Reibleiste 64 an der Halterung 66 gemäß der Figur 2 bei der Ausführungsform der Figur 3 zur Anwendung kommen. Weiterhin könnte bei der Ausführungsform nach Figur 3 die weitere Langlochverbindung entfallen und durch die als Druckfeder ausgeführte Feder 96' ersetzt werden.

Nach alledem ist erkennbar, dass die Verstellung der Gegenmesser 62 und der Reibleiste 64 stets gemeinsam erfolgt, was zugehörige Betätigungsmittel einspart und die Bedienung vereinfacht.

## Patentansprüche

1. Strohhäcksler (42) für einen Mähdrescher (10), mit einem Gehäuse (54-60), das einen Einlass (72) und einen Auslass (74) aufweist, einem im Gehäuse (54-60) angeordneten Rotor (46) mit pendelnd aufgehängten Häckselmessern (48), verstellbar angeordneten Gegenmessern (62), die in den Hüllkreis (52) der Häckselmesser (48) hineinfahrbar sind, und mit einer verstellbar angeordneten Reibleiste (64), die zwischen einer aktiven Betriebsposition, in der sie stromab der Gegenmesser (62) mit den Häckselmessern (48) zur Zerkleinerung des Strohs zusammenwirkt, und einer inaktiven Außerbetriebsposition bewegbar ist, **dadurch gekennzeichnet, dass** die Verstellung der Reibleiste (64) mit der Verstellung der Gegenmesser (62) gekoppelt ist.

2. Strohhäcksler (42) nach Anspruch 1, wobei Mechaniken zur Verstellung der Gegenmesser (62) und der Reibleiste (64) derart ausgelegt sind, dass ausgehend von einer Außerbetriebsposition zuerst die Gegenmesser (62) in den Hüllkreis (52) der Häckselmesser (48) gelangen und die Reibleiste (64) erst dann in ihre Betriebsposition gelangt, wenn die Gegenmesser (48) bis zu einem festgelegten Teil ihres Weges zu einer Endstellung oder bis zu ihrer Endstellung in den Hüllkreis (52) der Häckselmesser (48) gelangt sind.

3. Strohhäcksler (42) nach Anspruch 1 oder 2, wobei die Gegenmesser (62) und die Reibleiste (64) von Hand oder durch einen fremdkraftbetätigten Aktor (70) betätigbar sind.

4. Strohhäcksler (42) nach einem der Ansprüche 1 bis 3, wobei die Reibleiste (64) mit einer Halterung (66) gekoppelt ist, die über eine Langlochverbindung (84, 86) mit einem Aktor (70) oder manuell verstellbaren Betätigungsmitteln gekoppelt ist.

5. Strohhäcksler (42) nach einem der Ansprüche 1 bis 4, wobei die Mechanik zur Verstellung der Gegenmesser (62) eine Halterung (100) umfasst, die über eine Langlochverbindung (84', 86') mit einem Aktor (70) oder manuell verstellbaren Betätigungsmitteln gekoppelt ist.

6. Mähdrescher (10) mit einem Strohhäcksler (42) nach einem der vorhergehenden Ansprüche.

## Claims

1. Chaff chopper (42) for a combine harvester (10), with a housing (54-60), which has an inlet (72) and an outlet (74), a rotor (46), which is arranged in the housing (54-60) and has chopper blades (48) suspended in a swinging manner, adjustably arranged counter-blades (62) which are movable into the envelope circle (52) of the chopper blades (48), and with an adjustably arranged rub bar (64) which is movable between an active operating position, in which it interacts with the chopper blades (48) downstream of the counter-blades (62) in order to chop up the straw, and an inactive inoperative position, **characterized in that** the adjustment of the rub bar (64) is coupled to the adjustment of the counter-blades (62).

2. Chaff chopper (42) according to Claim 1, wherein mechanisms for adjusting the counter-blades (62) and the rub bar (64) are configured in such a manner that, starting from an inoperative position, first of all the counter-blades (62) enter into the envelope circle (52) of the chopper blades (48), and the rub bar (64) only enters into its operating position if the counter-blades (48), up to a defined part of their distance to an end position or up to their end position, have entered into the envelope circle (52) of the chopper blades (48).

3. Chaff chopper (42) according to Claim 1 or 2, wherein the counter-blades (62) and the rub bar (64) are actuable manually or by means of a power-actuated actuator (70).

4. Chaff chopper (42) according to one of Claims 1 to 3, wherein the rub bar (64) is coupled to a holder (66) which is coupled via an elongated hole connection (84, 86) to an actuator (70) or to manually adjustable actuating means.

5. Chaff chopper (42) according to one of Claims 1 to 4, wherein the mechanism for adjusting the counter-blades (62) comprises a holder (100) which is coupled via an elongated hole connection (84', 86') to an actuator (70) or to manually adjustable actuating means.

6. Combine harvester (10) with a chaff chopper (42) according to one of the preceding claims.

## Revendications

1. Hache-paille (42) pour moissonneuse-batteuse (10), présentant
un caisson (54-60) doté d'une entrée (72) et d'une sortie (74),
un rotor (46) disposé dans le caisson (54-60) et sur lequel sont suspendus des couteaux de hachage (48),
des contre-couteaux (62) ajustables qui peuvent être insérés dans le cercle d'enveloppe (52) des couteaux de hachage (48) et
une latte de friction (64) ajustable qui peut être déplacée entre une position active de service dans laquelle elle coopère avec les couteaux de hachage (48) en aval des contre-couteaux (62) pour déchiqueter la paille et une position inactive hors service,
**caractérisé en ce que**
le déplacement de la latte de friction (64) est accouplé au déplacement des contre-couteaux (62).

2. Hache-paille (42) selon la revendication 1, dans lequel les mécanismes d'ajustement des contre-couteaux (62) et de la latte de friction (64) sont conçus de telle sorte que partant d'une position hors service, les contre-couteaux (62) se rendent d'abord dans le cercle d'enveloppe (52) des couteaux de hachage (48) et la latte de friction (64) ne se rend dans sa position que si les contre-couteaux (48) sont arrivés dans une partie définie de leur parcours à une position finale ou jusqu'à leur position finale dans le cercle d'enveloppe (52) des couteaux de hachage (48).

3. Hache-paille (42) selon les revendications 1 ou 2, dans lequel les contre-couteaux (62) et la latte de friction (64) peuvent être actionnés à la main ou par un actionneur (70) actionné par une force extérieure.

4. Hache-paille (42) selon l'une des revendications 1 à 3, dans lequel la latte de friction (64) est accouplée à un support (66) qui est accouplé par l'intermédiaire d'une liaison (84, 86) à trous oblongs à un actionneur (70) ou à des moyens d'actionnement ajustables manuellement.

5. Hache-paille (42) selon l'une des revendications 1 à 4, dans lequel la mécanique d'ajustement des contre-couteaux (62) comporte un support (100) qui est accouplé par l'intermédiaire d'une liaison (84', 86') à trous oblongs à un actionneur (70) ou à des moyens d'actionnement ajustables manuellement.

6. Moissonneuse-batteuse (10) dotée d'un hache-paille (42) selon l'une des revendications précédentes.
